# EUROPÄISCHE PATENTANMELDUNG

(11) **EP 4 589 178 A1**
(43) Veröffentlichungstag der Anmeldung: **23.07.2025**
(21) Anmeldenummer: 25151625.8
(22) Anmeldetag: 14.01.2025
(51) Int. Cl.: F16H 63/30

(54) **SCHALTVORRICHTUNG UND ZUGFAHRZEUG**

(30) Priorität: 17.01.2024 DE 102024101274
(71) Anmelder: Deere & Company, Moline, IL 61265 (US)
(72) Erfinder: Lang, Matthias, Mannheim (DE); Busold, Thomas, Mannheim (DE); Kaiser, Mario, Mannheim (DE); Pfeil, Karl, Mannheim (DE); Kegel, Volker, Mannheim (DE); Frech, Joerg, Mannheim (DE); Mueller, David, Mannheim (DE)
(74) Vertreter: Stein, Stefan

(57) **Zusammenfassung**

Die Erfindung betrifft eine Schaltvorrichtung (40) zum Schalten von Gangstufen eines Fahrzeuggetriebes (30). Die Schaltvorrichtung (40) enthält mindestens eine entlang einer Schaltrichtung (48) translationsbewegliche Schaltstange (42), deren beide Stangenfreienden (44) hydraulisch beaufschlagbar jeweils in einer Druckkammer (46) für Hydraulikmedium gelagert sind. Die Schaltvorrichtung (40) weist einen Druckanschluss (50) und eine daran angeschlossene hydraulische Druckleitung (52) an jeder Druckkammer (46) auf. Außerdem ist an jeder Druckkammer (46) ein Tankanschluss (54) und eine daran angeschlossene hydraulische Rücklaufleitung (56) angeordnet. Die beiden Rücklaufleitungen (56) münden in eine gemeinsame Tankleitung (58) für den Anschluss an einen Hydrauliktank. Weiterhin betrifft die Erfindung ein Zugfahrzeug (10) mit einer solchen Schaltvorrichtung (40).

## Beschreibung

Die Erfindung betrifft eine Schaltvorrichtung zum Schalten von Gangstufen eines Fahrzeuggetriebes mit mindestens einer hydraulisch beaufschlagbaren Schaltstange. Weiterhin betrifft die Erfindung ein Zugfahrzeug mit einer solchen Schaltvorrichtung.

Bei Fahrzeuggetrieben ist es für das Schalten von Gangstufen bekannt, eine Schiebemuffe mittels einer Schaltgabel und einer daran befestigten Schaltstange axial zu bewegen. Die hierzu notwendige Bewegung der Schaltstange kann erzielt werden, indem diese an beiden Stangenfreienden mit hydraulischem Druck beaufschlagbar ist. Das Schaltverhalten ist hierbei von verschiedenen hydraulischen und mechanischen Faktoren abhängig.

Ausgehend von diesem Stand der Technik ist es Aufgabe der vorliegenden Erfindung, eine Schaltvorrichtung und ein Zugfahrzeug vorzuschlagen, welche mit einfachen technischen Mitteln ein zuverlässiges Schaltverhalten während des Fahrbetriebs ermöglichen.

Diese Aufgabe wird durch eine Schaltvorrichtung mit den Merkmalen des Patentanspruchs 1 und ein Zugfahrzeug mit den Merkmalen des Anspruchs 11 gelöst. Die abhängigen Ansprüche beziehen sich auf besonders vorteilhafte Ausführungsformen der Erfindung.

Gemäß Anspruch 1 wird eine Schaltvorrichtung für eine Gangschaltung eines Fahrzeuggetriebes vorgeschlagen, welche mindestens eine entlang einer Schaltrichtung translationsbeweglichen Schaltstange enthält. Zur Realisierung der Translationsbewegung sind beide Stangenfreienden der Schaltstange hydraulisch beaufschlagbar und hierzu jeweils in einer Druckkammer gelagert. Jede Druckkammer weist einen Druckanschluss und eine daran angeschlossene hydraulische Druckleitung auf. Hierdurch gelangt Hydraulikmedium (z.B. Öl) in die Druckkammern, um die beiden Stangenfreienden abhängig von der gewünschten Schaltstellung der Schaltstange mit hydraulischem Druck beaufschlagen zu können. Außerdem weist jede Druckkammer einen Tankanschluss und eine daran angeschlossene hydraulische Rücklaufleitung auf. Die beiden Rücklaufleitungen münden in eine gemeinsame Tankleitung, welche an einen Hydrauliktank anschließbar ist.

Die bezüglich beider Druckkammern gemeinsame Tankleitung schafft auf technisch einfache Weise stabile physikalische Voraussetzungen für präzise Druckverhältnisse in den beiden Hydraulikkammern. Durch unpräzise Druckverhältnisse hervorgerufene unerwünschte Axialbewegungen der Schaltstange mit einer entsprechend ungünstigeren Schaltqualität können einfacher vermieden werden. So können etwa zufällige Fehlpositionen der Schaltstange technisch unaufwändiger vermieden werden. Da die Druckverhältnisse Auswirkungen auf die Position der Schaltstange haben, können die für die unterschiedlichen Schaltpositionen (neutrale Mittelstellung oder eine von zwei möglichen Gangschaltstellungen) erforderlichen Bewegungstoleranzen für die Schaltstange kleiner dimensioniert werden. Selbst bei größeren unerwarteten Druckänderungen (Anstieg oder Abfall) im Hydraulikkreislauf der Schaltvorrichtung können etwaige zufällige Fehlpositionen der Schaltstange ohne besonderen technischen Mehraufwand vermieden werden.

Die Schaltvorrichtung kann abhängig von der Anzahl der zu schaltenden Gänge mit einer Schaltstange oder mehreren Schaltstangen ausgestattet sein. Vorzugsweise sind sämtliche vorhandene Schaltstangen mit denselben technischen Merkmalen kombiniert, wie anhand der einzelnen Schaltstange offenbart. Soll mit einer Schaltstange kein Gang geschaltet werden, überführt die hydraulische Beaufschlagung der beiden Stangenfreienden diese Schaltstange in eine neutrale Mittelstellung. Ggf. wird dann ein anderer Gang mittels einer anderen Schaltstange geschaltet.

Die Schaltvorrichtung kann innerhalb oder außerhalb eines Getriebegehäuses gelagert sein.

In einer bevorzugten Ausführungsform ist in der gemeinsamen Tankleitung eine Ventileinheit integriert, so dass letztere auf beide Druckkammern als eine gemeinsame technische Funktionskomponente hydraulisch einwirken kann. Da es sich für beide Rücklaufleitungen um eine gemeinsame Ventileinheit handelt, werden die mit jeweils einer Ventileinheit an beiden Rücklaufleitungen einhergehenden Nachteile vermieden.

Die Ventileinheit ermöglicht es, mit einfachen technischen Mitteln gewünschte Druckverhältnisse in den beiden Druckkammern zu unterstützen oder zu regulieren. Insbesondere ist die Ventileinheit als ein Sperrventil ausgebildet, welches ein unerwünschtes Abströmen des Hydraulikmediums aus den Druckkammern verhindern kann. Hierbei ist von Vorteil, dass das gemeinsame Sperrventil die Nachteile vermeidet, welche sich aus fertigungsbedingt vorhandenen Toleranzen zwischen zwei Sperrventilen ergeben würden, welche jeweils an einer Rücklaufleitung angeordnet wären. So würde etwa der vom abfließenden Hydraulikstrom zu überwindende Sperrdruck bei beiden Sperrventilen derselben Schaltstange unterschiedlich sein. Dies würde eine größere Dimensionierung des notwendigen Bewegungsspiels für die Schaltstange erfordern, um auch bei unerwartetem Druckanstieg oder Druckabfall immer die korrekte Position (neutrale Mittelstellung oder eine der beiden möglichen Gangschaltstellungen) zu gewährleisten. Mit dem gemeinsamen Sperrventil hingegen können zufällige Fehlpositionen der Schaltstange bei gleichzeitig kleiner Dimensionierung der Bewegungstoleranzen für die Schaltstange vermieden werden.

Vorzugsweise ist die Ventileinheit als ein Rückschlagventil ausgebildet, dessen Durchflussrichtung den Tankanschlüssen abgewandt ausgerichtet ist. Somit ist die Sperrrichtung des Rückschlagventils den Tankanschlüssen zugewandt ausgerichtet. Dies gewährleistet an der Ventileinheit einen Sperrdruck in Richtung der Tankanschlüsse, welcher insbesondere im Ruhezustand der Schaltvorrichtung bzw. Fahrzeugstillstand ein unerwünschtes Abfließen des Hydraulikmediums aus den Drucckammern und somit einen unerwünschten Eintritt von Luft in die Druckkammern verhindert. Dies unterstützt ein technisch hochwertiges Schaltverhalten der Gangschaltung beim nächsten Start des Zugfahrzeugs und Fahrzeuggetriebes.

Vorteilhaft ist das Rückschlagventil federkraftbeaufschlagt ausgebildet und kann als technisch zuverlässiges Standardbauteil bereitgestellt werden.

Alternativ ist das Rückschlagventil als ein Schwerkraftventil ausgebildet. Diese technisch einfache Ventilkonstruktion bietet sich insbesondere bei einer hydraulischen Schaltvorrichtung an, bei der das Hydraulikmedium von den Druckkammern zu einem Hydrauliktank entgegen der Schwerkraft abfließt.

In einer weiteren bevorzugten Ausführungsform ist ein Luftkanal vorgesehen, welcher an der Schaltstange und/oder an einer die Schaltstange tangierenden Kammerwandung der jeweiligen Hydraulikkammer angeordnet ist. Hierdurch kann in den Hydraulikkammern enthaltene Luft technisch einfach und zuverlässig verdrängt und abgeführt werden, wenn die Hydraulikkammern mit Hydraulikmedium gefüllt werden. Dies unterstützt ein qualitativ hochwertiges Schaltverhalten.

Der Luftkanal ist insbesondere in einem entgegen der Schwerkraft höchsten Bereich der Schaltstange und/oder der Kammerwandung angeordnet. Dies erleichtert ein effizientes Abführen der unerwünschten Luft aus den Hydraulikkammern, da die gasförmige Luft leichter ist als das Hydraulikmedium.

Vorzugsweise ist der Luftkanal als eine Ausnehmung, insbesondere in der Art einer Nut, ausgebildet. Der Luftkanal, insbesondere die Ausnehmung, ist an einer Oberfläche der Schaltstange und/oder an einer Oberfläche der Kammerwandung der Hydraulikkammer angeordnet und/oder ausgebildet. Im Speziellen kann der Luftkanal, insbesondere die Ausnehmung an einer äußeren Stangenoberfläche der Schaltstange und/oder an einer inneren Wandungsoberfläche der Kammerwandung der Hydraulikkammer angeordnet und/oder ausgebildet sein. Dieser Luftkanal lässt sich konstruktiv mit geringem Herstellungsaufwand an der Schaltstange und/oder der Kammerwandung bereitstellen.

Der Luftkanal kann unterschiedliche Querschnitte haben. Vorzugsweise ist ein dreieckförmiger oder ein bogenförmiger, insbesondere halbkreisförmiger, Querschnitt realisiert. Solche Querschnitte können mit geringem Aufwand präzise hergestellt werden.

Die Erfindung betrifft weiter ein Zugfahrzeug, insbesondere landwirtschaftliches Zugfahrzeug, mit einer Schaltvorrichtung nach einem der Ansprüche 1 bis 10. Das Zugfahrzeug, vorzugsweise ein Traktor oder Schlepper, kann außerdem einen Antriebsmotor, insbesondere Verbrennungsmotor, umfassen. Dabei kann eine Getriebeanordnung des Zugfahrzeugs vom Antriebsmotor antreibbar sein und mit zumindest einer Fahrzeugachse des Zugfahrzeugs in Antriebsverbindung stehen und/oder kann mit einer weiteren Fahrachse des Zugfahrzeugs in Antriebsverbindung bringbar sein. Das erfindungsgemäße Zugfahrzeug weist die oben beschriebenen Vorteile der erfindungsgemäßen Schaltvorrichtung auf.

Die Schaltvorrichtung kann innerhalb oder außerhalb eines Gehäuses der Getriebeanordnung gelagert sein.

Das erfindungsgemäße Zugfahrzeug ermöglicht auf technisch einfache Weise ein qualitativ hochwertiges und präzises Schaltverhalten beim Schalten einzelner Gänge und unterstützt folglich auch einen für den Fahrzeugführer komfortablen Fahrbetrieb.

Die erfindungsgemäße Schaltvorrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Darstellung eines erfindungsgemäßen landwirtschaftlichen Zugfahrzeugs,
- Fig. 2: eine schematische Seitenansicht der erfindungsgemäßen Schaltvorrichtung,
- Fig. 3: eine schematische Ansicht einer Schaltstange der Schaltvorrichtung gemäß Pfeilrichtung II in Fig. 2.

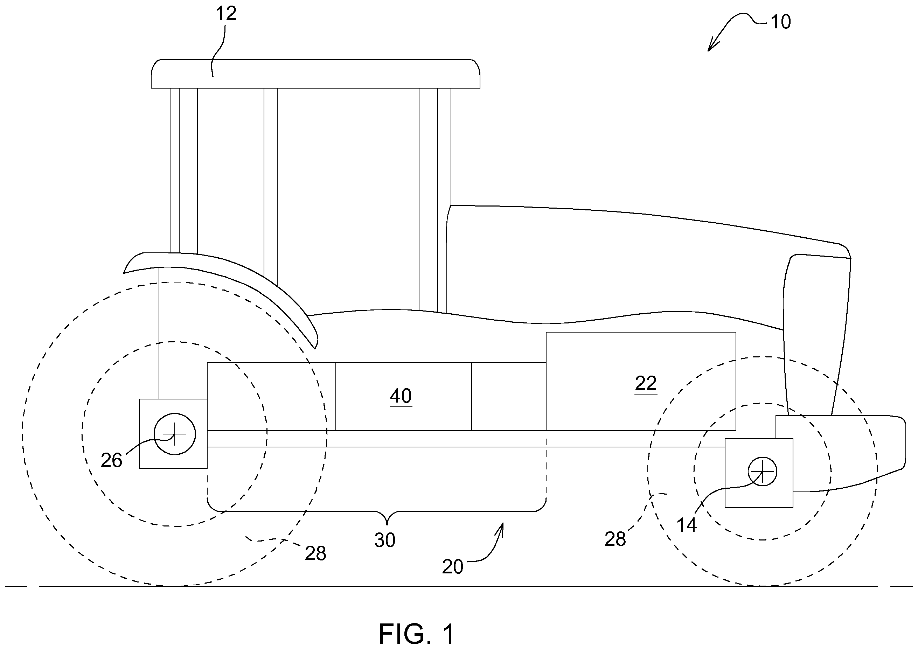

Figur 1 zeigt eine schematische Darstellung eines erfindungsgemäßen landwirtschaftlichen Zugfahrzeugs 10, insbesondere in Gestalt eines Traktors, mit einem Antriebsstrang 20 in einer möglichen Ausgestaltung. Der grundsätzliche Aufbau eines landwirtschaftlichen Zugfahrzeugs 10 wird als dem Fachmann bekannt angenommen. Das Zugfahrzeug 10 umfasst ferner eine Kabine 12, eine vordere Fahrzeugachse 14 und eine hintere Fahrzeugachse 26. Die vordere Fahrzeugachse 14 und die hintere Fahrzeugachse 26 sind Teil des Antriebsstrangs 20, wobei die hintere Fahrzeugachse 26 in der Regel permanent und die vordere Fahrzeugachse 14 in der Regel bedarfsweise zuschaltbar angetrieben werden können.

Der Antriebsstrang 20 umfasst ferner einen Antriebsmotor 22, der als Verbrennungskraftmaschine ausgeführt sein kann, und eine Getriebestruktur, die aus verschiedenen einzelnen Getriebekomponenten zusammengesetzt sein kann. Die Getriebestruktur kann im Kraft- und Momentenfluss, ausgehend vom Antriebsmotor 22, eine Getriebeanordnung 30 aufweisen. Die Getriebeanordnung 30 ist mit dem Antriebsmotor 22 antriebsverbunden und/oder kann mit dem Antriebsmotor 22 antreibbar sein.

Mit der Getriebeanordnung 30 lässt sich Antriebsleistung des Antriebsmotors 22 mit unterschiedlichen Gangstufen auf eine Ausgangswelle übertragen. Die mit der Ausgangswelle in Antriebsverbindung stehende hintere Fahrzeugachse 26, welche eine Drehung der vorderen und/oder hinteren Fahrzeugachse (über damit verbundene Bodeneingriffsmittel) in einen Vorschub des Traktors wandelt, wird daher abhängig von einer in der Getriebeanordnung 30 gewählten Gangstufe mit unterschiedlicher Drehzahl angetrieben. Folglich ist ein mit der Getriebeanordnung 30 ausgestatteter Traktor abhängig von der in der Getriebeanordnung 30 gewählten Gangstufe in unterschiedlichen Geschwindigkeitsbereichen bewegbar.

Das Zugfahrzeug 10 kann eines oder mehrere Bodeneingriffsmittel in Form von Rädern 28 aufweisen, welche mit einem Untergrund zur Übertragung von Antriebskräften in Eingriff stehen und/oder durch die sich das Zugfahrzeug 10 auf dem Untergrund abstützt. Das Zugfahrzeug 10 kann außerdem ein Fahrgestell aufweisen, wobei das Fahrgestell insbesondere von den an der vorderen und hinteren Fahrzeugachse 14, 26 aufgehängten Rädern getragen werden kann.

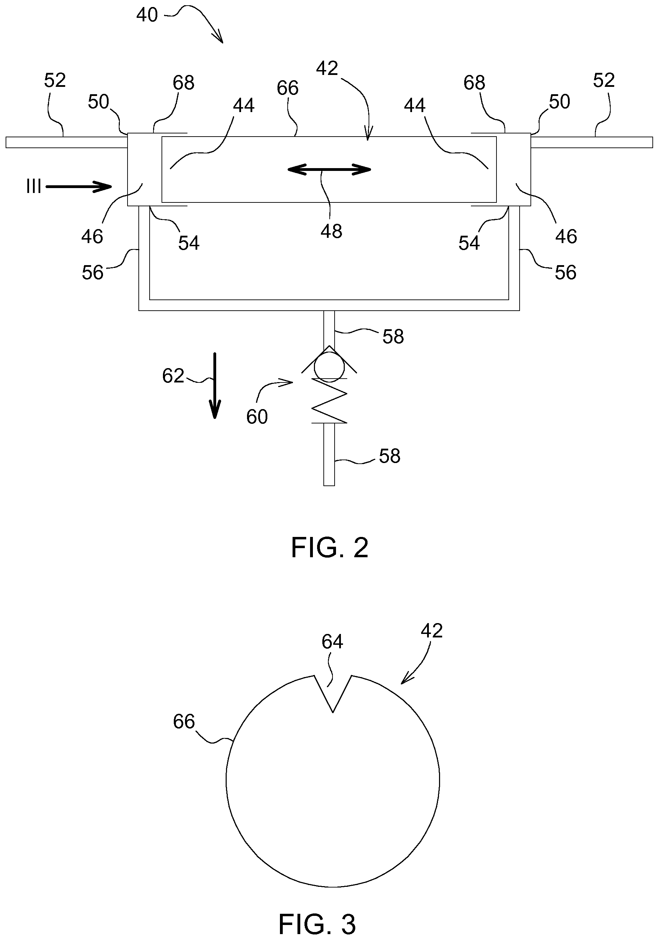

Figur 2 zeigt eine Schaltvorrichtung 40 mit mindestens einer Schaltstange 42. Vorzugsweise sind sämtliche vorhandenen Schaltstangen 42 mit denselben technischen Merkmalen kombiniert, wie nachfolgend anhand der einzelnen Schaltstange 42 beschrieben.

Die Schaltvorrichtung 40 kann innerhalb oder außerhalb eines Gehäuses der Getriebeanordnung 30 gelagert sein. Die Schaltvorrichtung 40 ist zum Schalten unterschiedlicher Gangstufen mit der Getriebeanordnung 30 beispielsweise derart gekoppelt, dass die hydraulisch beaufschlagte Schaltstange 42 über eine daran befestigte Schaltgabel eine an einer Getriebe-Ausgangswelle gelagerte Schiebemuffe axial verschiebt.

Die Schaltstange 42 weist zwei axial gegenüberliegende Stangenfreienden 44 auf, welche jeweils in einer Druckkammer 46 gelagert sind. Beide Stangenfreienden 44 sind mittels hydraulischem Druck beaufschlagbar, um eine spezifische oder definierte Bewegung entlang einer Axialrichtung 48 der Schaltstange 42 zu bewirken. Die als Schaltrichtung der Schaltstange 42 wirksame Axialrichtung 48 kann das Schalten einer Gangstufe oder eine Überführung der Schaltstange 42 in eine neutrale Mittelstellung erreichen. Die neutrale Mittelstellung ist in Figur 2 dargestellt. Ausgehend von dieser Mittelstellung kann die Schaltstange 42 abhängig von der hydraulischen Druckbeaufschlagung entweder nach links oder nach rechts bewegt werden, um von zwei möglichen Gangschaltstellungen eine Gangschaltstellung einzunehmen, was das Schalten einer Gangstufe bewirkt.

Für die Druckbeaufschlagung der Stangenfreienden 44 durch ein Hydraulikmedium (z.B. Öl) weist jede Druckkammer 46 einen Druckanschluss 50 mit einer daran angeschlossenen Druckleitung 52 auf. Für den Rücklauf des Hydraulikmediums an einen hier nicht dargestellten Hydrauliktank weisen die Druckkammern 46 jeweils einen Tankanschluss 54 und eine daran angeschlossene Rücklaufleitung 56 auf. Beide Rücklaufleitungen 56 münden in eine zum Hydrauliktank führende Tankleitung 58, in welche eine gemeinsame Ventileinheit 60, insbesondere in Form eines federkraftbeaufschlagten Rückschlagventils, integriert ist. Eine Durchflussrichtung 62 der als Sperrventil wirksamen Ventileinheit 60 ist den Tankanschlüssen 54 abgewandt ausgerichtet.

Figur 3 zeigt eine Seitenansicht der Schaltstange 42 entlang der Pfeilrichtung III in Figur 2. An der Schaltstange 42 ist ein parallel zur Axialrichtung 48 verlaufender Luftkanal 64 angeordnet. Dabei ist der Luftkanal 64 in einem entgegen der Schwerkraft höchsten Bereich der Schaltstange 42 an seiner äußeren Oberfläche 66 angeordnet, um unerwünschte Luft bzw. Gas aus den Hydraulikkammern 46 möglichst effizient abzuführen. Der Luftkanal 64 ist als eine Ausnehmung, insbesondere nach Art einer Nut, ausgebildet ist und hat im Ausführungsbeispiel einen dreieckförmigen Querschnitt. In weiteren hier nicht dargestellten Ausführungsformen kann beispielsweise ein bogenförmiger, insbesondere halbkreisförmiger, Querschnitt vorgesehen sein.

Alternativ oder zusätzlich zu dem Luftkanal 64 kann an einer Innenseite einer Kammerwandung 68 der jeweiligen Druckkammer 46 ein hier nicht dargestellter Luftkanal angeordnet sein, welcher das vorgenannte Abführen der Luft bzw. des Gases bewirkt oder in Kombination mit dem Luftkanal 64 unterstützt. Die einen solchen Luftkanal aufweisende Kammerwandung 68 tangiert die Schaltstange 42. Dabei ist der Luftkanal wiederum in einem entgegen der Schwerkraft höchsten Bereich der Kammerwandung 68 angeordnet.

## Patentansprüche

1. Schaltvorrichtung (40) zum Schalten von Gangstufen eines Fahrzeuggetriebes (30),
- mit mindestens einer entlang einer Schaltrichtung (48) translationsbeweglichen Schaltstange (42), deren beide Stangenfreienden (44) hydraulisch beaufschlagbar jeweils in einer Druckkammer (46) für Hydraulikmedium gelagert sind,
- mit einem Druckanschluss (50) und einer daran angeschlossenen hydraulischen Druckleitung (52) an jeder Druckkammer (46),
- mit einem Tankanschluss (54) und einer daran angeschlossenen hydraulischen Rücklaufleitung (56) an jeder Druckkammer (46),
wobei die beiden Rücklaufleitungen (56) in eine gemeinsame Tankleitung (58) für den Anschluss an einen Hydrauliktank münden.

2. Schaltvorrichtung nach Anspruch 1, **dadurch gekennzeichnet, dass** in der gemeinsamen Tankleitung (58) eine Ventileinheit (60), insbesondere ein Sperrventil, integriert ist.

3. Schaltvorrichtung nach Anspruch 2, **dadurch gekennzeichnet, dass** die Ventileinheit (60) als ein Rückschlagventil ausgebildet ist, dessen Durchflussrichtung (62) den Tankanschlüssen (54) abgewandt ausgerichtet ist.

4. Schaltvorrichtung nach Anspruch 3, **dadurch gekennzeichnet, dass** das Rückschlagventil (60) federkraftbeaufschlagt ist.

5. Schaltvorrichtung nach Anspruch 3, **dadurch gekennzeichnet, dass** das Rückschlagventil als ein Schwerkraftventil ausgebildet ist.

6. Schaltvorrichtung nach einem der vorhergehenden Ansprüche, **dadurch gekennzeichnet, dass** an der Schaltstange (42) und/oder an einer die Schaltstange (42) tangierenden Kammerwandung (68) der Druckkammer (46) ein Luftkanal (64) angeordnet ist.

7. Schaltvorrichtung nach Anspruch 6, **dadurch gekennzeichnet, dass** der Luftkanal (64) in einem entgegen der Schwerkraft höchsten Bereich der Schaltstange (42) und/oder der Kammerwandung (68) angeordnet ist.

8. Schaltvorrichtung nach Anspruch 6 oder 7, **dadurch gekennzeichnet, dass** der Luftkanal (64) als eine Ausnehmung ausgebildet.

9. Schaltvorrichtung nach Anspruch 6 bis 8, **dadurch gekennzeichnet, dass** der Luftkanal (64), insbesondere die Ausnehmung, an einer Oberfläche (66) der Schaltstange (42) und/oder an einer Oberfläche der Kammerwandung (68) der Hydraulikkammer (46) angeordnet ist.

10. Schaltvorrichtung nach einem der Ansprüche 6 bis 9, **dadurch gekennzeichnet, dass** der Luftkanal (64) einen dreieckförmigen Querschnitt aufweist.

11. Schaltvorrichtung nach einem der Ansprüche 6 bis 10, **dadurch gekennzeichnet, dass** der Luftkanal (64) einen bogenförmigen Querschnitt aufweist.

12. Zugfahrzeug, insbesondere landwirtschaftliches Zugfahrzeug (10), mit einer Schaltvorrichtung (40) nach einem der Ansprüche 1 bis 11.
